# EUROPÄISCHE PATENTSCHRIFT

(11) **EP 0 583 686 B1**
(45) Veröffentlichungstag und Bekanntmachung des Hinweises auf die Patenterteilung: **15.05.1996**
(21) Anmeldenummer: 93112491.1
(22) Anmeldetag: 04.08.1993
(51) Int. Cl.: C01B 21/068

(54) **Verfahren zur Herstellung eines Siliziumnitridpulvers**
Process for the preparation of silicon nitride powder
Procédé de préparation d'une poudre de nitrure de silicium

(30) Priorität: 17.08.1992 DE 4227072
(43) Veröffentlichungstag der Anmeldung: 23.02.1994
(73) Patentinhaber: BAYER AG, D-51368 Leverkusen (DE)
(72) Erfinder: Brink, Reinhold Dr., D-40670 Meerbusch (DE); Laubach, Benno Dr., D-47809 Krefeld (DE); Lange, Horst Dr., D-44803 Bochum (DE)

(56) Entgegenhaltungen:
- EP-A- 0 227 082
- GB-A- 2 172 882
- US-A- 4 788 049

## Beschreibung

Die vorliegende Erfindung betrifft ein Verfahren zur Herstellung eines Siliziumnitridpulvers mit hohem Gehalt an α-Phase und isometrischer Partikelform durch die thermische Zersetzung eines Gemisches einer stickstoffhaltigen Silanverbindung und eines kristallinen Si₃N₄-Pulvers.

An Siliziumnitrid-Pulver als Ausgangsmaterial für Hochleistungskeramiken werden hohe Anforderungen bezüglich des Gehaltes an α-Phase, der Partikelmorphologie und der chemischen Reinheit gestellt. Die Phasenzusammensetzung des Pulvers hat einen großen Einfluß auf die Gefügeentwicklung eines gesinterten Formteiles. Bei der Sinterung löst sich die α-Phase in der bei den hohen Sintertemperaturen als Schmelzphase vorliegenden Sekundärphase auf und wird als β-Si₃N₄ wieder ausgeschieden. Dabei bildet sich bei hohen α-Gehalten ein feinkörniges Gefüge aus ineinander verschränkten nadel- oder stäbchenförmigen β-Si₃N₄-Körnern, das ursächlich für hohe Biegebruchfestigkeiten und Bruchzähigkeiten ist [F.F. Lange, J. Amer. Ceram. Soc. 62 (1979) 428]. Die Umwandlung der α-Phase in die β-Phase ist zudem mit einem Energiegewinn von ca. 30 kJ/mol verbunden [R. Grün, Acta Cryst. 35 (1979) 800]. Bei höheren β-Gehalten der Ausgangspulver bildet sich hingegen ein Gefüge mit zunehmenden Anteil an globularen Körnern aus [M. Mitomo, J. Amer. Ceram. Soc. 73 (1990) 2441]. Für hohe Biegefestigkeiten gesinterter Formteile ist somit ein möglichst hoher Anteil an α-Phase im Si₃N₄-Pulver erforderlich.

Einen großen Einfluß auf die erreichbaren Biegebruchfestigkeiten gesinterter Formteile hat auch die Morphologie der Ausgangspulver. Erwünscht ist hier ein Pulver aus isometrischen Partikeln, während bei Pulvern mit Teilchen von nadel- oder säulenartiger Gestalt die erreichbare Sinterdichte zu gering ist, um hohe Biegefestigkeiten zu erreichen. Durch die nadelförmige Gestalt kann es zudem zu Gefügeinhomogenitäten kommen, die zu bruchauslösenden Fehlern im Bauteil führen.

Pulver mit hoher chemischer Reinheit können durch die Ammonolyse von reaktiven Siliziumverbindungen des Typs SiHₙRₘX₄₋ₙ₋ₘ (mit R = Alkylrest; X = Halogenidatom; n, m = 0, 1, 2, 3, 4) erzeugt werden. Bei der Umsetzung, die in der Gasphase oder in flüssiger Phase erfolgen kann, entsteht allerdings nicht direkt kristallines Si₃N₄, sondern ein Gemisch aus einer stickstoffhaltigen Silanverbindung und Ammoniumhalogenid. Die Abtrennung des Ammoniumhalogenids erfolgt entweder durch Extraktion mit flüssigem Ammoniak oder durch Sublimation.

Beim Erhitzen auf Temperaturen unterhalb 1200°C zersetzt sich das bei tieferen Temperaturen zunächst gebildete Siliziumdiimid unter Ammoniakabspaltung über die Zwischenprodukte Si₃N₅H₃ und Si₂N₃H zu röntgenamorphen, hydrolyseempfindlichen Si₃N₄ [Glemser und Naumann, Z. Anorg. Allg. Chemie 298 (1957) 134]. Bei Temperaturen oberhalb von 1200°C bildet sich hieraus schließlich kristallines Si₃N₄-Pulver.

Die Kristallisation von amorphen Si₃N₄ zu α-Si₃N₄ soll über einen Gasphasentransportmechanismus erfolgen [J. Hojo, H. Maeda, A. Kato; J. Amer. Ceram. Soc. Jpn. Intern. 96 (1988) 820]. Dabei dient Siliziummonoxid als Transportgas, indem Sauerstoff mit amorphem Si₃N₄ zu Si reagiert und mit Stickstoff α-Si₃N₄ unter Freisetzung des Sauerstoffs bildet.

In der JP-A-60-028467 wird ein Verfahren zur Herstellung eines kristallinen Si₃N₄-Pulvers mit hohem Gehalt an α-Phase beschrieben, indem dieser Gasphasentransportmechanismus ausgenützt und gefördert wird. Die Herstellung des Si₃N₄-Pulvers erfolgt dabei durch die thermische Zersetzung eines Gemisches aus einer stickstoffhaltigen Silanverbindung und eines kristallinen Siliziumnitrid-Pulvers, wobei das kristalline Si₃N₄-Pulver mindestens 1,0 Gew.-% Sauerstoff enthalten muß. Der Sauerstoffanteil von mindestens 1,0 Gew.-% ist dabei für die Aufrechterhaltung eines ausreichenden Partialdruckes an SiO erforderlich.

Der Sauerstoff in dem zugesetzten kristallinen Si₃N₄-Pulver soll eine Gasphase bilden, in der ein Teil der Stickstoffatome durch Sauerstoff ersetzt wird. Um SiO bilden zu können, darf der Sauerstoff nicht fest im Innern eines Si₃N₄-Korns gebunden sein, sondern muß leicht in die Gasphase übergehen können. Dieses ist nur oberflächennahen Sauerstoffatomen möglich, während Sauerstoffatome aus dem Korninnern erst durch langsame Diffusionsprozesse an die Kornoberfläche gelangen müssen, bevor sie in den Gasraum gelangen können.

Überraschenderweise wurde nun gefunden, daß es entgegen der Offenbarung der JP-A-60-028467 doch möglich ist, durch den Zusatz von kristallinen Si₃N₄-Pulvern mit weniger als 1 Gew.-% Sauerstoffgehalt bei der thermischen Zersetzung von stickstoffhaltigen Silanverbindungen kristalline Pulver mit einem Gehalt an α-Phase von über 90 % zu erhalten.

Vorzugsweise beträgt dabei der Sauerstoffgehalt der stickstoffhaltigen Silanverbindung weniger als 0,5 Gew.-%.

Ebenso sollte der Halogengehalt der Mischung aus einer stickstoffhaltigen Silanverbindung und dem kristallinen Si₃N₄ möglichst gering sein und weniger als 1 Gew.-%, bevorzugt weniger als 0,5 Gew.-%, betragen.

In einer bevorzugten Ausführungsform des erfindungsgemäßen Verfahrens wurde die stickstoffhaltige Silanverbindung durch die Umsetzung einer Siliziumverbindung des Typs SiHₙRₘX₄₋ₙ₋ₘ (R = Alkyl; X = Halogenid; n, m = 0, 1, 2, 3 oder 4) mit Ammoniak und anschließender Abtrennung von Ammoniumhalogenid durch Extraktion mit flüssigem Ammoniak oder Sublimation in einer Ammoniakatmosphäre hergestellt.

Es zeigt sich, daß der für die Bildung von SiO erforderliche Oberflächensauerstoffgehalt möglichst gering sein muß und kleiner als 15 % ist, um Si₃N₄-Pulver mit einem hohen Gehalt an α-Phase und globularer Partikelform zu erhalten.

Die Bestimmung des Oberflächensauerstoffgehaltes der Si₃N₄-Pulver erfolgte aus ESCA-Messungen, bei denen etwa die obersten 5 bis 10 Atomlagen eines Si₃N₄-Kornes erfaßt werden [M.Peuckert und P. Greil, J. Mat. Sci. 22 (1987) 3717]. Im Gegensatz zu der in der Patentanmeldung JP-A 60-028467 aufgestellten Behauptung, daß die Bildung von kristallinem Si₃N₄ durch die thermische Zersetzung von stickstoffhaltigen Silanverbindungen über eine Reaktion mit gasförmigem Siliziummonoxid erfolgt, zeigte sich, daß die Qualität der Si₃N₄-Pulver umso besser ist, je geringer die Konzentration des Siliziummonoxids ist.

Die Konzentration des Siliziummonoxids in der Gasphase beeinflußt neben dem Gehalt an α-Phase die Morphologie der Si₃N₄-Pulverpartikel. Bei hohen Konzentrationen bilden sich bevorzugt nadel- oder säulenartige Teilchen, die für hohe Sinterdichten und Biegebruchfestigkeiten keramischer Bauteile besonders schädlich sind. Bei niedriger SiO-Konzentration hingegen bestehen die Si₃N₄-Pulver aus Körnern mit der gewünschten globularen Partikelmorphologie.

Darüber hinaus zeichnen sich Pulver, bei denen die SiO-Konzentration während der thermischen Zersetzung von stickstoffhaltigen Silanverbindungen durch die erfindungsgemäße Zugabe eines kristallinen Pulvers mit weniger als 15 % Oberflächensauerstoffgehalt und eines Gesamtsauerstoffgehaltes des Gemisches von weniger als 1,0 Gew.-% gering gehalten wird, durch eine höhere spezifische Oberfläche aus.

Besonders vorteilhaft ist es, wenn das erfindungsgemäß eingesetzte kristalline Siliziumnitridpulver durch Naßmahlung und anschließende Laugung mit Flußsäure oder einem Flußsäure-haltigem Säuregemisch erhalten wurde.

In der EP-A 0 227 082 wird beschrieben, daß die Mischung aus einer stickstoffhaltigen Silanverbindung und kristallinem Si₃N₄ mindestens 0,1 Gew.-% eines kristallinen Si₃N₄-Pulver mit einer Teilchengröße kleiner als 0,05 µm enthalten muß. Überraschenderweise wurde aber gefunden, daß auch die Zugabe von 0,5 Gew.-% eines kristallinen Pulvers mit einer mittleren Teilchengröße von 0,5 µm und nur 10 % kleiner als 0,2 µm ausreicht, um zu einem Si₃N₄-Pulver mit einem Gehalt von mindestens 90 % α-Phase und isometrischer Partikelform zu gelangen. Wichtig ist vielmehr, daß der Oberflächensauerstoffgehalt des zugesetzten kristallinen Pulvers erfindungsgemäß weniger als 15 % beträgt.

Unabhängig von der Feinteiligkeit des kristallinen Siliziumnitridpulvers beträgt dessen bevorzugte Menge in der Reaktionsmischung 0,1 bis 5 Gew.-%, bevorzugt 0,1 bis 1,5 Gew.-%.

In der US-A 4 788 049 wird die Abhängigkeit der Pulvermorphologie von der Schüttdichte der Pulvermischung vor der Kristallisation beschrieben. Danach sind Schüttdichten von mindestens 0,3 g/cm³ erforderlich, um eine isometrische Teilchenform des Si₃N ₄-Pulvers zu erhalten. Es wurde jedoch gefunden, daß diese Pulver zwar weniger Nadeln enthalten als Pulver mit einer geringeren Schüttdichte, aber ohne die Zugabe eines kristallinen Si₃N₄-Pulvers mit den oben beschriebenen erfindungsgemäßen Eigenschaften dennoch Nadeln enthielten. Diese Pulver sind zudem gröber und haben einen α-Gehalt von weniger als 90 Gew.-%.

Bevorzugt wird erfindungsgemäß das Reaktionsgemisch vor der thermischen Zersetzung auf ein Schüttgewicht von mindestens 0,3 g/cm³ verdichtet. Die thermische Zersetzung wird besonders vorteilhaft in Temperaturbereich von 1250 bis 1600°C durchgeführt.

Im folgenden wird die Erfindung beispielhaft erläutert, ohne daß darin eine Einschränkung des Erfindungsgedankens zu sehen ist.

### Beispiele

Die Synthese der stickstoffhaltigen Silanverbindung erfolgte durch die Reaktion von SiCl₄ und NH₃ in der Gasphase und anschließender Sublimation von anhaftenden NH₄Cl bei 950°C in einer NH₃-Atmosphäre. Das Verhältnis von Stickstoff zu Silizium entsprach dabei der Verbindung Si₂N₃H. Der Sauerstoffgehalt der Silanverbindung betrug im Vergleichsbeispiel 3 1,1 Gew.-%, in allen anderen Versuchen weniger als 0,5 Gew.-%, der Chlorgehalt war geringer als 0,5 Gew.-%. Die Silanverbindung wurde mit 0,5 Gew.-% eines kristallinen Si₃N₄-Pulvers versetzt und eine Stunde in einem rotierendem Behälter aus Polyethylen, der teilweise mit Steatitkugeln gefüllt war, gemischt. Die Schüttdichte der Mischung betrug danach mehr als 0,3 g/cm³. Anschließend wurde das Pulver zunächst 2 Stunden bei 1300°C, danach 2 Stunden bei 1400°C in einer Stickstoffatmosphäre geglüht. Von den Produkten wurde der α-Gehalt, die spezifische BET-Oberfläche nach der N₂-1-Punktmethode (DIN 66 131) und die Morphologie der Teilchen bestimmt. Die Eigenschaften der zugesetzten kristallinen Si₃N₄-Pulver und der Produkte sind in der Tabelle 1 aufgelistet.

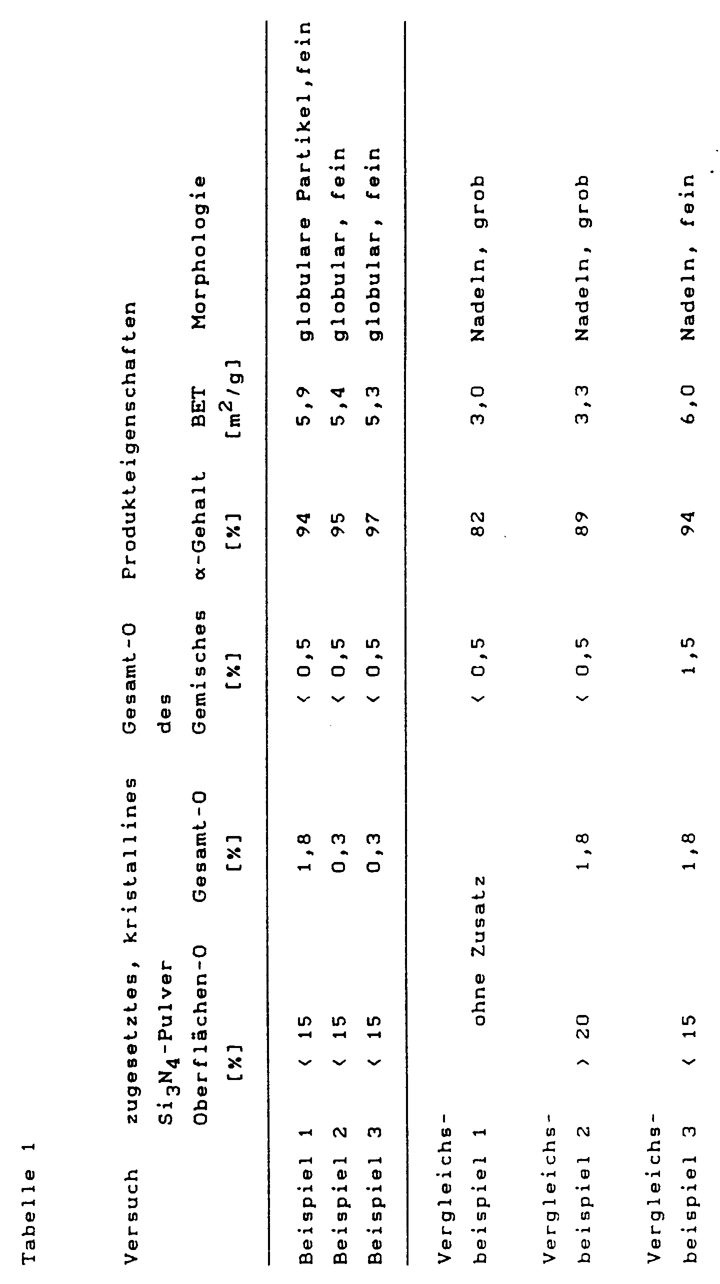

## Patentansprüche

1. Verfahren zur Herstellung eines Siliziumnitridpulvers mit einem Gehalt an α-Phase von über 90% und isometrischer Partikelform durch thermische Zersetzung eines Gemisches einer stickstoffhaltigen Silanverbindung und eines kristallinen Siliziumnitridpulvers, dadurch gekennzeichnet, daß der Sauerstoffgehalt der stickstoffhaltigen Silanverbindung weniger als 1 Gew.-% und der Oberflächensauerstoffgehalt des kristallinen Siliziumnitridpulvers weniger als 15 Gew.-% betragen.

2. Verfahren gemäß Anspruch 1, dadurch gekennzeichnet, daß der Sauerstoffgehalt der stickstoffhaltigen Silanverbindung weniger als 0,5 Gew.-% beträgt.

3. Verfahren gemäß einem der Ansprüche 1 oder 2, dadurch gekennzeichnet, daß der Halogengehalt der stickstoffhaltigen Silanverbindung weniger als 1 Gew.-%, bevorzugt weniger als 0,5 Gew.-%, beträgt.

4. Verfahren gemäß einem oder mehreren der Ansprüche 1 bis 3, dadurch gekennzeichnet, daß die stickstoffhaltige Silanverbindung durch die Umsetzung einer Siliziumverbindung des Typs SiHₙRₘX₄₋ₙ₋ₘ (R = Alkyl; X = Halogenid; n, m = 0, 1, 2, 3 oder 4) mit Ammoniak und anschließender Abtrennung von Ammoniumhalogenid durch Extraktion mit flüssigem Ammoniak oder Sublimation in einer Ammoniakatmosphäre hergestellt wurde.

5. Verfahren gemäß einem oder mehreren der Ansprüche 1 bis 4, dadurch gekennzeichnet, daß das kristalline Siliziumnitridpulver durch Naßmahlung und anschließender Laugung mit Flußsäure oder einem Flußsäure-haltigen Säuregemisch erhalten wurde.

6. Verfahren gemäß einem oder mehreren der Ansprüche 1 bis 5, dadurch gekennzeichnet, daß die Menge des kristallinen Siliziumnitridpulvers in der Mischung 0,1 bis 5 Gew.-%, bevorzugt 0,1 Gew.-% bis 1,5 Gew.-%, beträgt.

7. Verfahren gemäß einem oder mehreren der Ansprüche 1 bis 6, dadurch gekennzeichnet, daß das Gemisch vor der thermischen Zersetzung auf ein Schüttgewicht von mindestens 0,3 g/cm³ verdichtet wird.

8. Verfahren gemäß einem oder mehreren der Ansprüche 1 bis 7, dadurch gekennzeichnet, daß die thermische Zersetzung bei Temperaturen im Temperaturbereich von 1250 bis 1600° C durchgeführt wird.

## Claims

1. Process for the production of a silicon nitride powder with an α-phase content of over 90% and isometric particle form by thermal decomposition of a mixture of a silane compound containing nitrogen and a crystalline silicon nitride powder, characterised in that the oxygen content of the silane compound containing nitrogen amounts to less than 1 wt-% and the surface-oxygen content of the crystalline silicon nitride powder amounts to less than 15 wt-%.

2. Process according to Claim 1, characterised in that the oxygen content of the silane compound containing nitrogen amounts to less than 0.5 wt-%.

3. Process according to either of Claims 1 or 2, characterised in that the halogen content of the silane compound containing nitrogen amounts to less than 1 wt-%, preferably less than 0.5 wt-%.

4. Process according to one or more of Claims 1 to 3, characterised in that the silane compound containing nitrogen was produced by the reaction of a silicon compound of the type SiHₙRₘX₄₋ₙ₋ₘ (R = alkyl; X = halide; n, m = 0, 1, 2, 3 or 4) with ammonia and subsequent separation of ammonium halide by extraction with liquid ammonia or sublimation in an ammonia atmosphere.

5. Process according to one or more of Claims 1 to 4, characterised in that the crystalline silicon nitride powder was obtained by wet grinding and subsequent leaching with hydrofluoric acid or an acid mixture containing hydrofluoric acid.

6. Process according to one or more of Claims 1 to 5, characterised in that the quantity of the crystalline silicon nitride powder in the mixture amounts to 0.1 to 5 wt-%, preferably 0.1 wt-% to 1.5 wt-%.

7. Process according to one or more of Claims 1 to 6, characterised in that prior to the thermal decomposition the mixture is compressed to a bulk weight of at least 0.3 g/cm³.

8. Process according to one or more of Claims 1 to 7, characterised in that the thermal decomposition is carried out in the temperature range from 1250 to 1600°C.

## Revendications

1. Procédé de préparation d'une poudre de nitrure de silicium ayant une teneur en phase α supérieure à 90% et une forme de particules isométrique par décomposition thermique d'un mélange d'un composé azoté du silane et d'une poudre de nitrure de silicium cristalline, caractérisé en ce que la teneur en oxygène du composé azoté du silane est inférieure à 1% en masse et la teneur en oxygène superficielle de la poudre de nitrure de silicium cristalline est inférieure à 15% en masse.

2. Procédé selon la revendication 1, caractérisé en ce que la teneur en oxygène du composé azoté du silane est inférieure à 0,5% en masse.

3. Procédé selon l'une des revendications 1 ou 2, caractérisé en ce que la teneur en halogène du composé azoté du silane est inférieure à 1% en masse, de préférence inférieure à 0,5% en masse.

4. Procédé selon une ou plusieurs des revendications 1 à 3, caractérisé en ce que le composé azoté du silane a été préparé par réaction d'un composé du silicium de type SiHₙRₘX₄₋ₙ₋ₘ (R =alkyle ; X = halogénure ; n, m = 0, 1, 2, 3 ou 4) avec l'ammoniac puis séparation de l'halogénure d'ammonium par extraction avec de l'ammoniac liquide ou sublimation dans une atmosphère d'ammoniac.

5. Procédé selon une ou plusieurs des revendications 1 à 4, caractérisé en ce que la poudre de nitrure de silicium cristalline a été obtenue par broyage humide puis lessivage avec de l'acide fluorhydrique ou avec mélange d'acides contenant de l'acide fluorhydrique.

6. Procédé selon une ou plusieurs des revendications 1 à 5, caractérisé en ce que la quantité de la poudre de nitrure de silicium cristalline dans le mélange est de 0,1 à 5% en masse, de préférence de 0,1 à 1,5% en masse.

7. Procédé selon une ou plusieurs des revendications 1 à 6, caractérisé en ce que le mélange est densifié avant la décomposition thermique à une densité apparente d'au moins 0,3 g/cm³.

8. Procédé selon une ou plusieurs des revendications 1 à 7, caractérisé en ce que la décomposition thermique est réalisée à des températures situées dans le domaine des températures de 1 250 à 1 600°C.
